Europäisches Patentamt

European Patent Office

Office européen des brevets

(11) Veröffentlichungsnummer: **0 301 261**
**A2**

(12) **EUROPÄISCHE PATENTANMELDUNG**

(21) Anmeldenummer: 88110431.9

(22) Anmeldetag: 30.06.88

(51) Int. Cl.⁴: **C01B 17/90 , C22B 34/12**

(30) Priorität: **25.07.87 DE 3724677**

(43) Veröffentlichungstag der Anmeldung:
**01.02.89 Patentblatt 89/05**

(84) Benannte Vertragsstaaten:
**BE DE ES FR GB IT**

(71) Anmelder: **KRONOS TITAN-Gesellschaft mbH**
**Peschstrasse 5 Postfach 10 07 20**
**D-5090 Leverkusen 1(DE)**

(72) Erfinder: **Cole, Donald**
**Albrecht-Dürer-Strasse 64**
**D-5024 Pulheim(DE)**
Erfinder: **Hartmann, Achim Dipl.-Ing.**
**Lucas-Cranach-strasse 18**
**D-5024 Pulheim(DE)**

(54) **Verfahren zur Aufarbeitung von eisen (II)-sulfathaltigen Metallsulfatgemischen.**

(57) Die bei der Aufkonzentrierung von metallsulfathaltigen verdünnten Schwefelsäurelösungen bis zu einer $H_2SO_4$-Konzentration von 50 bis 75 Gewichtsprozent anfallenden Metallsulfatgemische werden in der Regel thermisch gespalten. Bei Betriebsstörungen muß die Spaltung des Metallsulfatgemisches unterbrochen und das Metallsulfatgemisch auf eine Deponie gebracht werden. Hierzu müssen lösliche Bestandteile unlöslich gemacht werden. Bei der bekannten Anmaischung mit Wasser und Versetzung mit Calciumoxid ergeben sich lange Umsetzungszeiten, die eine kontinuierliche Durchführung erschweren. Die Umsetzungsdauer soll herabgesetzt werden.

Das Calciumoxid wird in feinteiliger Form und das Wasser in einer Menge von 70 bis 90 g je 100 g Metallsulfatgemisch eingesetzt. Alle drei Bestandteile werden gleichzeitig getrennt in eine Mischzone eingeführt, in der ein flüssiges Reaktionsgemisch gebildet wird, und die Umsetzung wird außerhalb der Mischzone unter Verfestigung zu Ende geführt. Die Umsetzung erfolgt sehr rasch innerhalb 1 bis 2 Minuten.

Herstellung eines lagerstabilen Schüttgutes, das nur sehr wenig lösliche Bestandteile enthält.

EP 0 301 261 A2

Xerox Copy Centre

## Verfahren zur Aufarbeitung von eisen(II)-sulfathaltigen Metallsulfatgemischen

Die Erfindung betrifft ein Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, wobei das aus dieser Suspension abgetrennte Metallsulfatgemisch mit Calciumoxid und unter Mitverwendung von Wasser umgesetzt wird, wobei schwerlösliche Feststoffe gebildet werden.

Bei vielen Prozessen, insbesondere bei der Herstellung von Titandioxid durch Hydrolyse von titanylsulfathaltigen Aufschlußlösungen im sogenannten "Sulfatprozeß", fallen verdünnte Schwefelsäurelösungen an, die Metallsulfate enthalten. Ein wesentlicher Bestandteil dieser Metallsulfate ist Eisen(II)-sulfat. Es besteht nun das Problem, diese verdünnten Schwefelsäurelösungen wieder nutzbringend zu verwerten. Insbesondere besteht das Bestreben, den Schwefelsäureanteil dieser Schwefelsäurelösungen bei der Titandioxidherstellung wieder einzusetzen. Hierzu müssen die Schwefelsäurelösungen zumindest teilweise durch Eindampfen oder andere Maßnahmen aufkonzentriert werden. Im allgemeinen wird dabei die Aufkonzentrierung der Schwefelsäurelösungen so weit geführt, daß eine $H_2SO_4$-Konzentration von 50 bis 75 Gewichtsprozent erreicht wird. Bei der Aufkonzentrierung fallen die Metallsulfate in Form eines Metallsulfatgemisches aus. Dieses Metallsulfatgemisch wird nach Erreichen der gewünschten Endkonzentration abgetrennt, und die weitgehend von den Metallsulfaten befreite aufkonzentrierte Schwefelsäurelösung wird entweder einer Hochkonzentrierungsstufe zugeführt oder in den Titandioxid-Herstellungsprozeß direkt zurückgeführt. Entsprechende Verfahren sind unter anderem in der DE-A1-26 18 121, in der DE-C2-26 18 122 und in der DE-C2-27 29 755 beschrieben. Gegebenenfalls kann die Aufkonzentrierung in mehreren Stufen durchgeführt werden, wobei nach einer Vorkonzentrierungsstufe gegebenenfalls ausgefallenes Eisen(II)-sulfat-Heptahydrat aus der Lösung abgetrennt werden kann.

Das Metallsulfatgemisch fällt in Form eines schwach feuchten Pulvers an und besteht im wesentlichen aus den Sulfaten von Eisen, Magnesium und Titan, wobei das Eisensulfat überwiegend als Eisen(II)-sulfat-Monohydrat vorliegt. Außerdem enthält das Metallsulfatgemisch noch anhaftende Schwefelsäure (weiterhin als "Haftsäure" bezeichnet) und geringe Mengen weiterer Metallsulfate, z. B. die Sulfate von Mangan, Aluminium, Chrom und Vanadium.

Das Metallsulfatgemisch wird in der Regel gemeinsam mit Eisensulfiden und/oder Schwefel und/oder unter Zusatz anderer Energieträger thermisch gespalten und das entstandene Schwefeldioxid zu Schwefelsäure verarbeitet.

Diese Spaltung des Metallsulfatgemisches muß bei Unterbrechungen des Betriebes unterbrochen werden. In der Zeit der Unterbrechung muß das Metallsulfatgemisch auf eine Deponie gebracht werden. Eine direkte Ablagerung des Metallsulfatgemisches ist wegen seines hohen $H_2SO_4$-Gehaltes und wegen der Wasserlöslichkeit der Sulfate nicht möglich. Es besteht somit die Notwendigkeit, das Metallsulfatgemisch in eine für die Deponie geeignete Form umzuwandeln. An das zu deponierende Material werden folgende Bedingungen gestellt, die zu erfüllen sind:

Gute Handhabbarkeit verbunden mit entsprechenden bodenmechanischen Eigenschaften; Unlöslichkeit der Metallverbindungen, insbesondere der Verbindungen von Chrom und Vanadium.

Es ist aus der EP-A2-0 132 820 bekannt, das Metallsulfatgemisch dadurch deponiefähig zu machen, daß die Metallsulfate neutralisiert und unter Bildung von schwerlöslichen Metallverbindungen umgesetzt werden. Für die Umsetzung werden dabei Calciumoxid, Calciumhydroxid und/oder Calciumcarbonat verwendet. Außerdem muß bei dieser Umsetzung Wasser eingesetzt werden.

Es wird dabei vorzugsweise angestrebt, die eingesetzten Mengen an der Calciumverbindung und an Wasser möglichst gering zu halten und so zu arbeiten, daß zum Schluß nicht eine Suspension entsteht, aus der das bei der Umsetzung erhaltene Produkt in einem gesonderten Filtrationsschritt abgetrennt werden muß, sondern direkt ein festes rieselfähiges Produkt, das der Deponie zugeführt werden kann.

Gemäß einer speziellen Ausführungsform des bekannten Verfahrens wird das Metallsulfatgemisch mit Wasser angemaischt und dann mit der Calciumverbindung versetzt. Dieses Verfahren hat den Nachteil, daß bis zur vollständigen Umsetzung eine relativ lange Verfahrensdauer von 10 Minuten erforderlich ist. Diese lange Verfahrensdauer erschwert eine kontinuierliche Durchführung der Umsetzung.

Es wurde nach einem neuen Verfahren gesucht, bei dem die Verfahrensdauer erheblich verkürzt wird und das Verfahren leicht kontinuierlich durchgeführt werden kann. Hierbei wurde zunächst festgestellt, daß die lange Verfahrensdauer bei dem bekannten Verfahren offensichtlich darauf zurückzuführen ist, daß die eingesetzte Wassermenge mit 30 bis 40 g je 100 g Metallsulfatgemisch sehr gering ist.

Eine Erhöhung der Wassermenge auf 80 g je 100 g Metallsulfatgemisch ergab eine erhebliche Beschleunigung der Umsetzung. Es wurde dann bereits nach 30 Sekunden ein festes Umsetzungsprodukt erhalten. Gleichzeitig wurde aber der vollständige Ablauf der Umsetzung unter anderem durch das gebildete Calciumsulfat-Dihydrat behindert. Eine vollständige Umsetzung konnte nur dann erreicht werden, wenn die Menge der einzusetzenden Calciumverbindung erheblich erhöht wurde.

Es wurde nun gefunden, daß man eine äußerst rasche vollständige Umsetzung ohne Mehrverbrauch an der einzusetzenden Calciumverbindung erreichen kann, wenn man in einer ganz bestimmten Weise vorgeht.

Es wurde ein neues Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, gefunden, wobei das aus dieser Suspension abgetrennte Metallsulfatgemisch mit Calciumoxid und unter Mitverwendung von Wasser umgesetzt wird, wobei schwerlösliche Feststoffe gebildet werden. Dieses Verfahren ist dadurch gekennzeichnet, daß

a) das Calciumoxid in feinteiliger Form mit einer solchen Korngröße eingesetzt wird, daß mindestens 50 % einen Teilchendurchmesser von weniger als 63 μm aufweisen,

b) die Menge des eingesetzten Wassers 70 bis 90 g je 100 g des eingesetzten Metallsulfatgemisches beträgt,

c) das Metallsulfatgemisch, das Calciumoxid und das Wasser gleichzeitig und getrennt in eine Mischzone eingeführt werden, in der ein flüssiges Reaktionsgemisch gebildet wird,

d) das noch flüssige Reaktionsgemisch aus der Mischzone kontinuierlich abgezogen wird und

e) die Umsetzung außerhalb der Mischzone unter Verfestigung des Reaktionsgemisches zu Ende geführt wird.

Es zeigte sich, daß bei der erfindungsgemäßen Arbeitsweise eine homogene und zähflüssige Reaktionsmasse erhalten wird, die bereits nach 1 bis 2 Minuten zu einem kompakten und festen Kuchen erstarrt. Für die Durchführung des erfindungsgemäßen Verfahrens ist es wesentlich, daß die Reaktionsmasse bereits vor ihrer Erstarrung aus der Mischzone abgezogen wird, so daß die Verfestigung des Reaktionsgemisches außerhalb der Mischzone erfolgt. Das erhaltene Reaktionsprodukt ist homogen und weist keine nicht reagierten Bestandteile auf. Insbesondere enthält es keine umweltbelastenden wasserlöslichen Stoffe.

In der Mischzone tritt eine exotherme Umsetzung zwischen den zugeführten Substanzen ein, so daß es dort zu einer Temperaturerhöhung kommt, die bis zu 110 °C erreichen kann. Dabei kommt die Reaktionsmasse zum Sieden. Das intensive Sieden sorgt für eine gute Durchmischung der Bestandteile.

Die Menge des eingesetzten Calciumoxids richtet sich nach der Zusammensetzung des Metallsulfatgemisches, d. h. nach seinem Anteil an Sulfationen, die einerseits von den Metallsulfaten selbst und andererseits von der Haftsäure stammen. An sich reicht schon die Calciumoxidmenge aus, die stöchiometrisch erforderlich ist, um die Sulfationen aus dem Metallsulfatgemisch zu binden. Es ist aber im allgemeinen zweckmäßig, das Calciumoxid in einem geringen Überschuß über diese stöchiometrische Menge einzusetzen, um sicherzugehen, daß alle Metallsulfate in unlösliche Verbindungen übergeführt werden. Dieser Überschuß wird im allgemeinen nicht mehr als bis zu 20 % betragen. Er kann leicht anhand einiger Versuche bestimmt werden.

Die Korngröße des eingesetzten Calciumoxids ist für die Durchführung der Umsetzung von Bedeutung. Mindestens 50 % des Calciumoxids sollen einen Teilchendurchmesser von weniger als 63 μm aufweisen, wenn man die Umsetzung in rationeller Weise durchführen will. Wird gröberes Calciumoxid mit einer Korngröße außerhalb des beanspruchten Bereiches eingesetzt, dann muß die einzusetzende Calciumoxidmenge erhöht werden, wenn die Umsetzung in befriedigender Weise ablaufen soll. Dieser vermehrte Calciumoxidverbrauch ist einerseits mit erhöhten Kosten verbunden und führt andererseits zu einem Endprodukt, das wegen seines erhöhten Gehaltes an Calciumoxid und seiner übermäßig alkalischen Reaktion nur beschränkt oder sogar überhaupt nicht unmittelbar deponiefähig ist.

Es wird angenommen, daß bei der Umsetzung zunächst Calciumsulfat-Hemihydrat gebildet wird, das dann mit dem anwesenden Wasser in Calciumsulfat-Dihydrat umgewandelt wird, welches die mechanische Stabilität und die Rieselfähigkeit des erhaltenen Materials wesentlich beeinflußt. Diese Gegebenheiten bestimmen die erfindungsgemäß einzusetzende Wassermenge. Nach unten wird diese Wassermenge dadurch begrenzt, daß im Gemisch zumindest lokal eine flüssige Phase gebildet werden muß, da die Umsetzung nur in der flüssigen Phase einsetzen kann. Andererseits darf die einzusetzende Wassermenge auch nicht zu hoch sein, weil dann die Temperatur in der Mischzone zu stark herabgesetzt wird und die Umsetzung an der Oberfläche der Teilchen des Metallsulfatgemisches zum Stillstand kommt, ohne daß alle Anteile im Inneren der Teilchen von der Umsetzung erfaßt werden. Es hat sich gezeigt, daß die Menge des eingesetzten Wassers 70 bis 90 g je 100 g eingesetzten Metallsulfatgemisches betragen muß. Besonders vorteilhaft ist es, wenn soviel Wasser zugesetzt wird, daß die für die Calciumsulfat-Dihydratbildung erforderliche Wassermenge zur Verfügung steht. Diese stöchiometrische Wassermenge resultiert aus der zugesetzten und der bei der Umsetzung gebildeten Wassermenge, vermindert durch die durch Verdampfen

3

aus dem Reaktionsgemisch entweichende Wassermenge.

Im Rahmen der vorgegebenen Grenzen kann die zugesetzte Wassermenge variiert werden. Die jeweils gewählte Wassermenge beeinflußt die Erstarrungszeit des Reaktionsgemisches, seine mechanische Stabilität beim Transport und seine Rieselfähigkeit. Je höher die Wassermenge ist, desto später tritt die Erstarrung ein und desto geringer ist die mechanische Stabilität und damit die Transport- und Deponiefähigkeit des erhaltenen Materials. Man wird zwar einerseits möglichst wenig Wasser einsetzen, um ein mechanisch möglichst stabiles gut rieselfähiges Material mit guten Deponieeigenschaften zu erhalten, andererseits darf die Wassermenge nicht zu gering sein, weil sonst die Erstarrung bereits in der Mischzone beginnt. Die optimale Wassermenge ist außerdem noch vom $H_2SO_4$-Gehalt in der Haftsäure des eingesetzten Metallsulfatgemisches abhängig. Sie kann jeweils leicht durch Versuche ermittelt und nach der bis zur Erstarrung gewünschten Umsetzungsdauer eingestellt werden.

Die Temperatur, mit der die einzelnen Reaktionsteilnehmer eingesetzt werden, wirkt sich auf die Reaktionsführung nur wenig aus und ist deshalb weithin frei wählbar. Vorzugsweise werden das Calciumoxid und das Wasser mit Zimmertemperatur und das Metallsulfatgemisch mit einer Temperatur von 50 bis 60 °C, in Einzelfällen auch bis 70 °C, eingesetzt.

Es ist mitunter zweckmäßig, in der Mischzone eine gewisse Menge Wasser vorzulegen, bevor man mit der Zugabe der Reaktionspartner beginnt. Durch diese Maßnahme wird der Start der Umsetzung erleichtert.

Eine bevorzugte Ausführungsform des erfindungsgemäßen Verfahrens besteht darin, daß das noch flüssige Reaktionsgemisch auf einem Bandtransporter abgezogen wird. Auf dem Transportband verfestigt sich das Reaktionsgemisch in Form eines endlosen Materialstranges und kann leicht in fester Form vom Bandtransporter abgezogen werden.

Vorzugsweise wird das verfestigte Reaktionsgemisch einer Grobzerkleinerung unterworfen. Durch die Grobzerkleinerung wird ein rieselfähiges Schüttgut erhalten, das eine gute Transport- und Lagerfähigkeit aufweist. Für die Grobzerkleinerung können alle für diesen Zweck geeigneten Vorrichtungen eingesetzt werden. z. B. ein Walzenbrecher mit Schneidprofil.

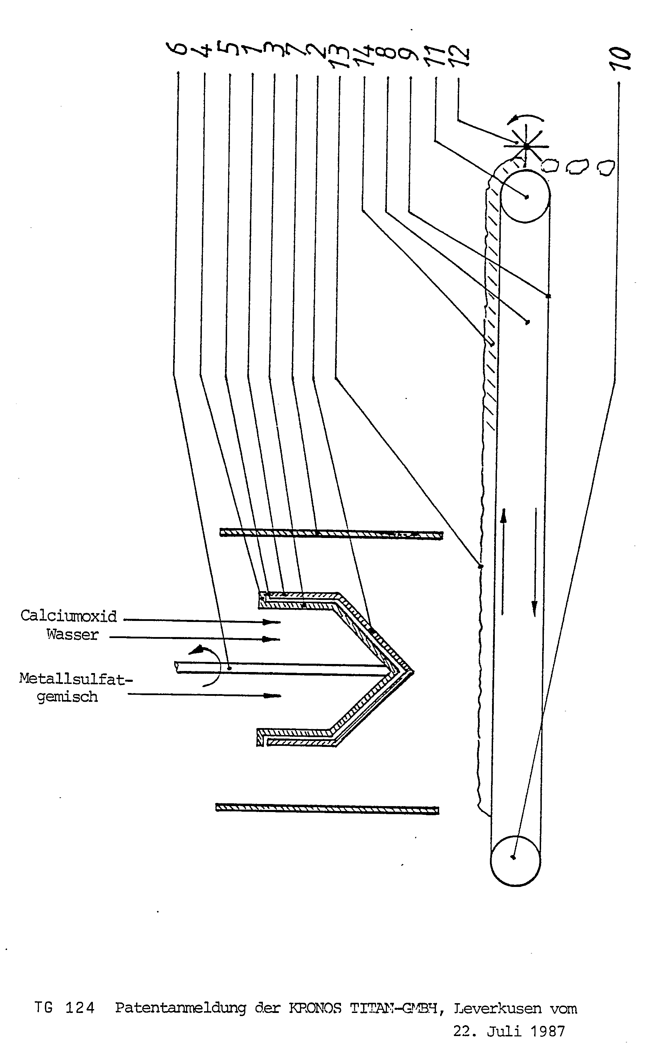

In der Abbildung wird ein Beispiel für eine Vorrichtung gezeigt, die für die Durchführung des erfindungsgemäßen Verfahrens geeignet ist.

Diese Vorrichtung enthält ein zylindrisches Reaktionsgefäß 1 mit einem konischen Boden 2. In diesem Reaktionsgefäß 1 ist ein Ankerrührer 3 angeordnet, dessen Form dem Wandprofil des Reaktionsgefäßes 1 entspricht. Die Flügelenden 4 des Ankerrührers 3 sind als Abstreifer für die Überlaufkante 5 des Reaktionsgefäßes 1 ausgebildet. Der Ankerrührer 3 wird über eine Welle 6 angetrieben.

Das Reaktionsgefäß 1 ist koaxial von einem zylindrischen Vorhang 7 aus einem elastischen Material umgeben.

Unterhalb des Reaktionsgefäßes 1 ist ein Bandtransporter 8 angeordnet. Er weist ein Transportband 9 auf, das über Umlenkrollen 10 und 11 angetrieben wird. Gegenüber der Umlenkrolle 11 ist ein Walzenbrecher mit Schneidprofil 12 angeordnet.

Zum Anfahren wird im Reaktionsgefäß 1 Wasser vorgelegt, wobei das Reaktionsgefäß 1 teilweise oder vollständig mit Wasser gefüllt ist. Dann wird der Ankerrührer 3 in Betrieb genommen. Nach Inbetriebnahme des Ankerrührers 3 werden die Reaktionskomponenten im entsprechenden Massenverhältnis kontinuierlich von oben in unmittelbarer Nähe der Welle 6 in das Reaktionsgefäß 1 eingegeben. Das entstehende heiße flüssige Reaktionsgemisch wird nach Erreichen der Überlaufkante 5 vom Ankerrührer 3 an den Vorhang 7 geschleudert und fließt von dort in definierter Breite auf das Transportband 9. Durch den Abstreifer 4 wird die Überlaufkante 5 des Gefäßes 1 vom Reaktionsgemisch freigehalten. Das Reaktionsgemisch ist zunächst im Bereich 13 des Transportbandes 9 noch flüssig, erstarrt dann aber im Bereich 14 zu einer festen Masse. An der Umlenk-Rolle 11 wird diese Masse durch den Walzenbrecher mit Schneidprofil 12 zerkleinert und gelangt dann in ein (nicht gezeichnetes) Auffanggefäß.

Infolge der kontinuierlichen Arbeitsweise ist die Menge der einmal beim Anfahren zugesetzten Wassermenge im Verhältnis zur insgesamt zugesetzten Wassermenge sehr gering, so daß sie bei der Berechnung des Mengenverhältnisses der laufend zugegebenen Reaktionspartner vernachlässigt werden kann.

Die Durchführung des erfindungsgemäßen Verfahrens ist nicht auf die in der Abbildung gezeigte Vorrichtung beschränkt. Es kann jede andere hierfür geeignete Vorrichtung eingesetzt werden.

Durch folgende Beispiele wird die Erfindung näher erläutert:

Das eingesetzte Metallsulfatgemisch wurde beim Aufkonzentrieren einer Hydrolysenmutterlauge aus der Titandioxidherstellung nach dem Sulfatprozeß gewonnen und hatte die in der Tabelle 1 angegebene Zusammensetzung:

Tabelle 1

| Bestandteil | Gehalt (in Prozent) |
|---|---|
| $FeSO_4$ | 41,3 |
| $Fe(HSO_4)_2$ | 10,7 |
| $TiOSO_4$ | 7,1 |
| $MgSO_4$ | 13,1 |
| $Al_2(SO_4)_3$ | 0,58 |
| $MnSO_4$ | 0,96 |
| $Cr_2(SO_4)_3$ | 0,29 |
| $VOSO_4$ | 0,99 |
| $H_2SO_4$ | 12,5 |
| $H_2O$ (frei und Hydrat-Wasser) | 12,5 |

Beispiel 1

Es wurde eine Vorrichtung gemäß der Abbildung verwendet. Das Reaktionsgefäß 1 besaß einen Durchmesser von 20 cm und hatte einen Inhalt von 3 Litern. Der Vorhang 7 besaß einen Durchmesser von 35 cm und das Transportband eine Breite von 50 cm.

Das Reaktionsgefäß 1 wurde zunächst zu einem Viertel mit Wasser von Zimmertemperatur gefüllt. Nach Inbetriebnahme des Ankerrührers 3 wurden kontinuierlich 200 kg/h des Metallsulfatgemisches, das eine Temperatur von etwa 60 °C aufwies, 84 kg/h Calciumoxid von Zimmertemperatur und 160 kg/h Wasser von Zimmertemperatur in das Reaktionsgefäß 1 eingeleitet. Im Reaktionsgefäß 1 bildete sich eine zähe noch gut fließfähige Reaktionsmasse, die eine Temperatur von 100 °C aufwies. Durch Sieden der Reaktionsmasse wurde eine intensive Mischung der Bestandteile bewirkt. Die noch flüssige Reaktionsmasse wurde auf dem Bandtransporter 8 abgezogen und erstarrte dort nach 1,5 Minuten zu einem festen Kuchen. Dieser Kuchen war im Innern homogen. Er wurde mit dem Walzenbrecher mit Schneidprofil 12 zerkleinert, und es wurde so ein riesel- und transportfähiges lagerstabiles Schüttgut erhalten.

Dieses Schüttgut wurde bei 120 °C getrocknet und dann auf lösliche Bestandteile geprüft, wobei im wesentlichen nach dem Verfahren DIN 38414-S4 vorgegangen wurde. Hierbei wurden 20 g des Schüttgutes einer einstündigen einmaligen Eluierung mit 200 ml Wasser unterworfen. Die Analysenergebnisse des Eluats sind in Tabelle 2 aufgezeigt.

Beispiel 2 (Vergleichsbeispiel)

1000g des Metallsulfatgemisches wurden in 800 ml Wasser von Zimmertemperatur 30 Sekunden lang suspendiert. Unter Rühren wurden dann in die Suspension 30 Sekunden lang 420 g des Calciumoxids zugegeben. Nach beendeter Calciumoxidzugabe war das Reaktionsgemisch fest. Es enthielt Einschlüsse von nicht umgesetztem Calciumoxid. Das Reaktionsgemisch wurde wie in Beispiel 1 untersucht, und die Ergebnisse sind ebenfalls in Tabelle 2 aufgezeigt.

Tabelle 2

Bestandteil in mg/l

| Bestandteil | Beispiel 1 | Beispiel 2 (Vergleichsbeispiel) |
|---|---|---|
| Ca | 660 | 540 |
| Fe | 2,0 | 14,0 |
| Mg | 2,0 | 2150 |
| Mn | 0,2 | 115,0 |
| Al | <1,0 | <1,0 |
| Ti | <1,0 | <1,0 |
| Cr | <0,1 | 4,1 |
| V | <0,1 | 12,0 |
| $SO_4''$ | 1500 | 9100 |
| pH-Wert | 10,8 | 6,0 |

Tabelle 2 zeigt, daß durch das erfindungsgemäße Verfahren ein Produkt erhalten wurde, daß nur eine sehr geringe Menge an löslichen Bestandteilen enthielt und somit ohne weiteres auf die Deponie gebracht werden konnte. Vor allem die in hohem Maße unerwünschten Bestandteile wie Chrom und Vanadium wurden praktisch quantitativ in eine unlösliche Form übergeführt.

**Ansprüche**

1. Verfahren zur Aufarbeitung von eisen(II)-sulfathaltigen Metallsulfatgemischen, die beim Eindampfen von metallsulfathaltigen verdünnten Schwefelsäurelösungen bis zu einer $H_2SO_4$-Konzentration von 50 bis 75 Gewichtsprozent in der flüssigen Phase der entstehenden Metallsulfatsuspension gebildet werden, wobei das aus dieser Suspension abgetrennte Metallsulfatgemisch mit Calciumoxid und unter Mitverwendung von Wasser umgesetzt wird, wobei schwerlösliche Feststoffe gebildet werden, dadurch gekennzeichnet, daß

a) das Calciumoxid in feinteiliger Form mit einer solchen Korngröße eingesetzt wird, daß mindestens 50 % einen Teilchendurchmesser von weniger als 63 μm aufweisen,

b) die Menge des eingesetzten Wassers 70 bis 90 g je 100 g des eingesetzten Metallsulfatgemisches beträgt,

c) das Metallsulfatgemisch, das Calciumoxid und das Wasser gleichzeitig und getrennt in eine Mischzone eingeführt werden, in der ein flüssiges Reaktionsgemisch gebildet wird,

d) das noch flüssige Reaktionsgemisch aus der Mischzone kontinuierlich abgezogen wird und

e) die Umsetzung außerhalb der Mischzone unter Verfestigung des Reaktionsgemisches zu Ende geführt wird.

2. Verfahren nach Anspruch 1, dadurch gekennzeichnet, daß das noch flüssige Reaktionsgemisch auf einem Bandtransporter abgezogen wird.

6

Calciumoxid

Wasser

Metallsulfatgemisch

TG 124 Patentanmeldung der KRONOS TITAN-GMBH, Leverkusen vom
22. Juli 1987